# FASCICULE DE BREVET EUROPEEN

(11) **EP 2 326 913 B1**
(45) Date de publication et mention de la délivrance du brevet: **10.10.2012**
(21) Numéro de dépôt: 09782943.6
(22) Date de dépôt: 14.09.2009
(51) Int. Cl.: G01B 5/25, B21D 3/10, G21C 17/06, G21C 3/00, G01B 21/24, G01B 7/28

(54) **DISPOSITIF DE MESURE ET DE CORRECTION D'UN DEFAUT DE PARALLELISME D'UN CRAYON DE COMBUSTIBLE NUCLEAIRE**
EINRICHTUNG ZUM MESSEN UND KORREGIEREN EINES PARALLELISMUSFEHLERS EINES KERNBRENNSTABS
DEVICE FOR MEASURING AND CORRECTING A PARALLELISM ERROR OF A NUCLEAR FUEL ROD

(30) Priorité: 15.09.2008 FR 0856182
(43) Date de publication de la demande: 01.06.2011
(73) Titulaire: AREVA NC, 75009 Paris (FR)
(72) Inventeur: LAVIOS, Daniel, F-30290 Laudun L'Ardoise (FR)
(74) Mandataire: Ilgart, Jean-Christophe
(86) Numéro de dépôt international: PCT/EP2009/061839
(87) Numéro de publication internationale: WO 2010/029166

(56) Documents cités:
- WO-A1-2004/053414
- FR-A- 2 587 107
- FR-A- 2 593 095
- JP-A- 7 284 853
- JP-A- 10 123 283
- JP-A- 62 040 933
- US-A- 3 429 169
- US-A- 3 456 467

## Description

### DOMAINE TECHNIQUE ET ART ANTÉRIEUR

La présente invention se rapporte à un dispositif de mesure et de correction d'un défaut de parallélisme d'un crayon de combustible nucléaire, plus particulièrement d'un défaut de parallélisme au niveau de l'extrémité munie du bouchon supérieur.

Un assemblage de combustible nucléaire est constitué d'une pluralité de crayons de combustible nucléaire disposés parallèlement les uns par rapport aux autres de telle sorte que l'assemblage ait une section transversale sensiblement carrée.

Chaque crayon comporte une gaine, qui est un tube très long et de faible diamètre, obturée au niveau de son extrémité inférieure et dans laquelle sont empilées des pastilles de combustible nucléaire de forme cylindrique à section circulaire. Lorsque le nombre de pastilles requis a été introduit dans la gaine, son extrémité ouverte est obturée par un bouchon, dit bouchon supérieur. Cet ensemble formé par la gaine, les bouchons inférieur et supérieur et les pastilles constitue le crayon.

L'assemblage comporte un embout inférieur recevant l'extrémité de chaque crayon muni du bouchon inférieur et un embout supérieur recevant l'extrémité de chaque crayon muni du bouchon supérieur. L'embout inférieur et l'embout supérieur sont pourvus de logements recevant individuellement chaque extrémité de crayon. Les embouts supérieur et inférieur sont reliés par des tiges rigides de manière à former un châssis rigide.

Afin de pouvoir garantir une bonne connexion entre le crayon, plus particulièrement son extrémité munie du bouchon supérieur et l'embout supérieur, il est requis que le parallélisme de l'extrémité de bouchon supérieur soit suffisant.

Or, il se peut qu'un défaut de parallélisme apparaisse au niveau de l'extrémité du bouchon supérieur lorsque le bouchon supérieur est soudé sur le tube soudé bouchon inférieur ou TSBI qui correspond à la gaine munie du bouchon inférieur. Un tel défaut peut aussi apparaître du fait d'une déformation accidentelle de l'extrémité du bouchon supérieur pendant la manutention des crayons. D'autres causes peuvent être à l'origine de ce défaut de parallélisme.

Le document JP 10 123283 décrit un dispositif de mesure du défaut de parallélisme d'une extrémité de crayon comportant un palpeur, le crayon étant mis en rotation.

Ce document décrit également un dispositif de mesure du défaut de parallélisme comportant au moins deux sondes de capteurs linéaires orthogonaux à l'axe du crayon, pour mesurer l'axe du bouchon supérieur, l'utilisation d'au moins deux sondes permettant d'éviter de mettre en rotation le crayon. Cette mesure permet de mesurer l'écart entre l'axe du bouchon supérieur et celui du crayon.

Ces dispositifs de mesure ne permettent pas de corriger le défaut de parallélisme.

En outre, la correction de ce défaut doit être très contrôlée pour éviter de créer un autre défaut de parallélisme, en corrigeant de manière excessive le premier défaut.

C'est par conséquent un but de la présente invention d'offrir un dispositif permettant à la fois la mesure d'un défaut de parallélisme et sa correction et ceci de manière fiable.

### EXPOSÉ DE L'INVENTION

Le but précédemment énoncé est atteint par un dispositif de mesure d'un défaut de parallélisme et de correction de ce défaut comportant un moyen de mesure de ce défaut, et un moyen de correction de ce défaut, les moyens de mesure et de correction étant agencés de telle sorte qu'ils permettent une mesure en temps réel du défaut, plus particulièrement de son évolution au cours de sa correction. Le dispositif comporte également des moyens de positionnement dudit dispositif sur le crayon et coopérant avec un râtelier sur lequel est stocké le crayon.

Ainsi, ce dispositif évite de corriger excessivement le défaut et d'en faire apparaître un autre. Il est facilement transportable et manipulable.

En outre, il permet avec un seul appareil de faire la mesure et la correction, ce qui évite les manipulations de crayon, réduisant donc les risques de détérioration de ceux-ci. De plus, le temps nécessaire à ces deux étapes est réduit de manière notable. Par conséquent, le temps de fabrication d'un crayon est réduit.

On prévoit avantageusement que ce dispositif soit portable, ce qui évite de déplacer les crayons, puisque l'on déplace le dispositif de mesure et de correction.

La présente invention a alors principalement pour objet un dispositif de mesure et de correction d'un défaut de parallélisme d'une extrémité bouchon supérieur d'un crayon de combustible nucléaire comportant des moyens de mesure d'un défaut de parallélisme et des moyens de correction dudit défaut, lesdits moyens de correction étant disposés à l'opposé des moyens de mesure par rapport à l'emplacement du crayon, afin de permettre une mesure du défaut de parallélisme pendant la correction dudit défaut.

Les moyens de mesure comportent par exemple un palpeur destiné à venir en contact avec la périphérie de l'extrémité bouchon supérieur du crayon, ledit palpeur étant mobile le long d'un axe transversal à l'axe de l'emplacement du crayon.

Les moyens de correction peuvent comporter, quant à eux, un poussoir destiné à venir en contact avec la périphérie de l'extrémité bouchon supérieur du crayon, ledit poussoir étant mobile le long d'un axe transversal à l'axe de l'emplacement du crayon, l'axe de déplacement du poussoir et l'axe de déplacement du palpeur étant contenus dans un plan contenant l'axe de déplacement du crayon.

Le dispositif selon l'invention comporte également des moyens de maintien du crayon tout en permettant de faire tourner ledit crayon autour de son axe longitudinal, lesdits moyens de maintien comportant une mâchoire inférieure et une mâchoire supérieure destinées à enserrer le crayon, la mâchoire inférieure formant une référence pour la mesure du défaut de parallélisme.

De manière avantageuse, les mâchoires sont en matériau réduisant les frottements, par exemple en ertalyte ®, ce qui permet d'assurer le maintien du crayon sans empêcher la rotation du crayon.

La mâchoire supérieure est avantageusement montée articulée autour d'un axe parallèle à l'axe de l'emplacement du crayon, et des moyens de verrouillage en position de maintien des mâchoires inférieure et supérieure étant prévus, ce qui facilite la mise en place du crayon.

Le poussoir est par exemple monté sur une extrémité d'une tige filetée montée dans un trou taraudé réalisé à l'extrémité d'un bras, ladite tige comportant une poignée à l'extrémité opposée à celle sur laquelle est fixé le poussoir, permettant de déplacer manuellement le poussoir.

Une butée est avantageusement fixée sur la tige à laquelle est fixé le poussoir de sorte à limiter le déplacement du poussoir en direction du palpeur, ce qui évite une déformation excessive de l'extrémité bouchon supérieur.

Le dispositif selon l'invention peut également comporter une bague entre les moyens de maintien et les moyens de correction, d'axe parallèle à l'axe de l'emplacement du crayon, ladite bague étant destinée à être traversée par le crayon et destinée à reprendre les efforts de déformation appliqués au crayon.

Le dispositif selon l'invention peut aussi comporter une butée axiale pour le crayon, cette butée étant disposée transversalement par rapport à l'axe de l'emplacement du crayon, en aval des moyens de mesure dans le sens d'insertion du crayon dans le dispositif. Le positionnement du crayon est alors aisé.

Le dispositif comporte également des moyens de positionnement dudit dispositif par rapport au crayon, lesdits moyens de positionnement étant destinés à coopérer avec le crayon et un râtelier sur lequel est entreposé le crayon, lesdits moyens de positionnement comportant deux pièces en forme de fer à cheval dont les fonds intérieurs sont destinés à reposer sur une zone supérieure de la périphérie du crayon, les deux pièces étant écartées l'une de l'autre d'une distance donnée, de sorte à permettre le chevauchement du râtelier sur lequel repose l'extrémité bouchon supérieur du crayon, le support ayant une épaisseur sensiblement égale à la distance séparant les deux pièces en fer à cheval. Ces moyens évitent de devoir recourir à un support extérieur en utilisant le râtelier et le crayon comme support.

Par exemple, les moyens de mesure et les moyens de correction sont portés par une plateforme raccordée aux moyens de positionnement par deux poutres parallèles destinées à longer le crayon.

Les moyens de verrouillage des mâchoires inférieure et supérieure sont par exemple formés par une tige filetée montée articulée autour d'un axe parallèle à l'axe de l'emplacement du crayon, sur un côté opposé à celui sur lequel la mâchoire supérieure est articulée, et un bouton vissé sur la tige filetée, la mâchoire comportant une encoche pour recevoir la tige filetée, le bouton étant disposé à l'opposé de la mâchoire inférieure par rapport à la mâchoire supérieure lorsque la tige est dans l'encoche, pour assurer le verrouillage des mâchoires inférieure et supérieure. Ces moyens de verrouillage sont de réalisation simple et assurent un verrouillage rapide et efficace.

La présente invention a également pour objet un procédé de mesure et de correction d'un défaut de parallélisme mettant en oeuvre le dispositif de mesure et de correction selon l'invention, comportant les étapes suivantes:
a) mise en place du dispositif sur le crayon au niveau de l'extrémité bouchon supérieur,
b) déplacement du crayon le long de son axe pour le positionner entre les moyens de mesure et les moyens de correction,
c) verrouillage des moyens de maintien du crayon,
d) rotation du crayon et détection du défaut de parallélisme,
e) détermination de la correction à effectuer,
f) orientation de ce défaut en direction des moyens de correction,
g) correction de ce défaut par application d'un effort de déformation appliqué par les moyens de correction, et contrôle simultané avec les informations fournies par les moyens de mesure,
h) vérification du défaut de parallélisme en contrôlant qu'il est inférieur à une valeur seuil donnée,
i) réitération des étapes d) à h) si la valeur du défaut de parallélisme est supérieure à la valeur seuil donnée.

On prévoit avantageusement de faire tourner le crayon manuellement, rendant le procédé simple et le dispositif encore moins encombrant et plus robuste.

### BRÈVE DESCRIPTION DES DESSINS

La présente invention sera mieux comprise à l'aide de la description qui va suivre et des dessins, sur lesquels :
- la figure 1 est une vue en perspective de trois quarts d'un exemple de réalisation d'un dispositif de mesure et de correction selon la présente invention,
- les figures 2A à 2I' sont des vues du dispositif de la figure 1 lors des différentes étapes de mesure et de correction du défaut de parallélisme d'un crayon de combustible nucléaire,
- les figures 3A et 3B sont des représentations schématiques du cadran des moyens de mesure lors de la mesure d'un défaut de parallélisme.

### EXPOSÉ DÉTAILLÉ DE MODES DE RÉALISATION PARTICULIERS

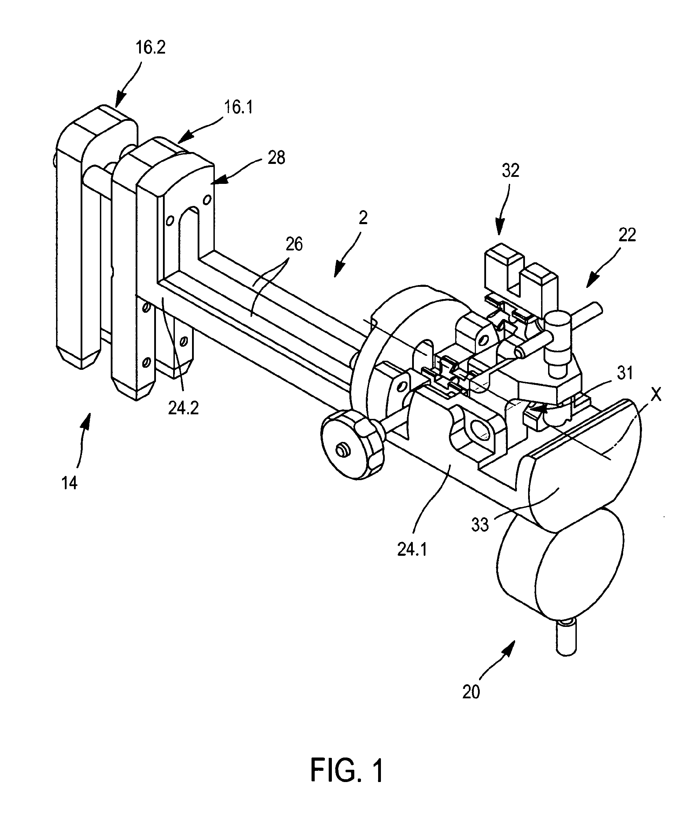

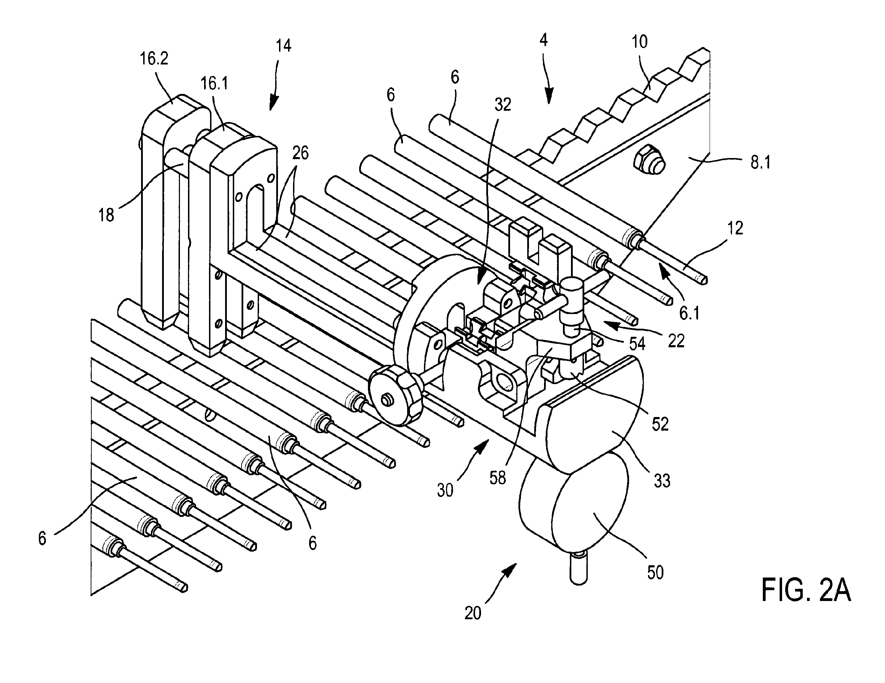

Sur la figure 1 et les figures 2A à 2I', on peut voir un exemple de réalisation d'un dispositif 2 de mesure et de correction d'un crayon de combustible nucléaire, désigné dispositif dans la suite de la description.

Le dispositif 2 est destiné à être positionné sur un râtelier 4, visible sur la figure 2A, sur lequel sont entreposés les crayons 6.

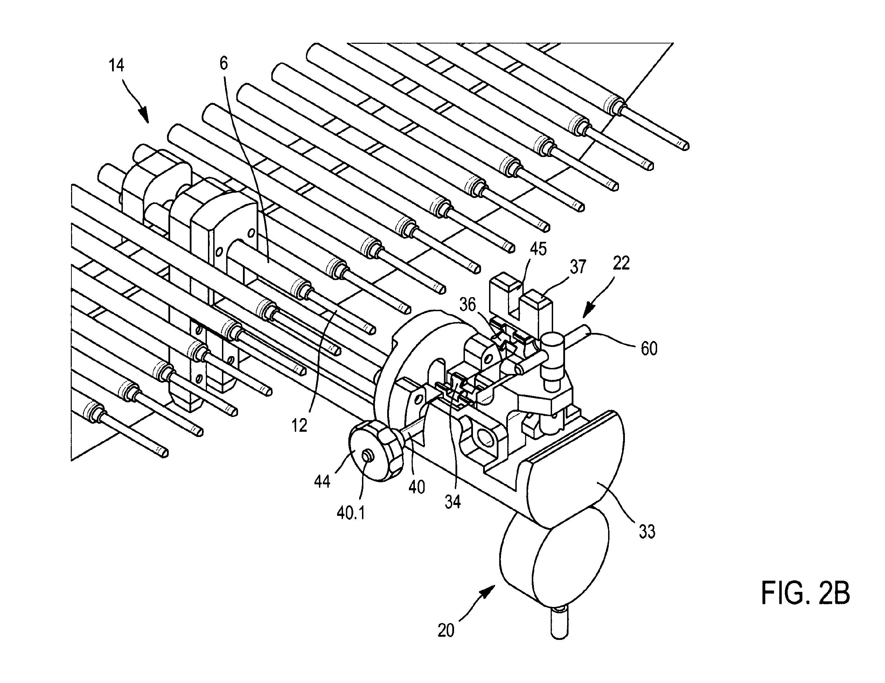

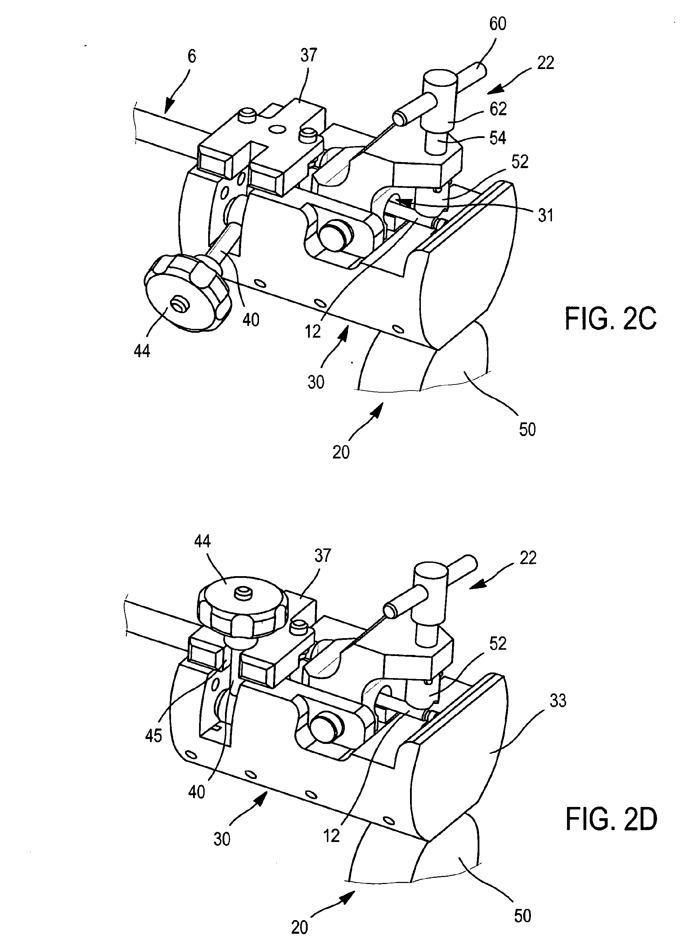

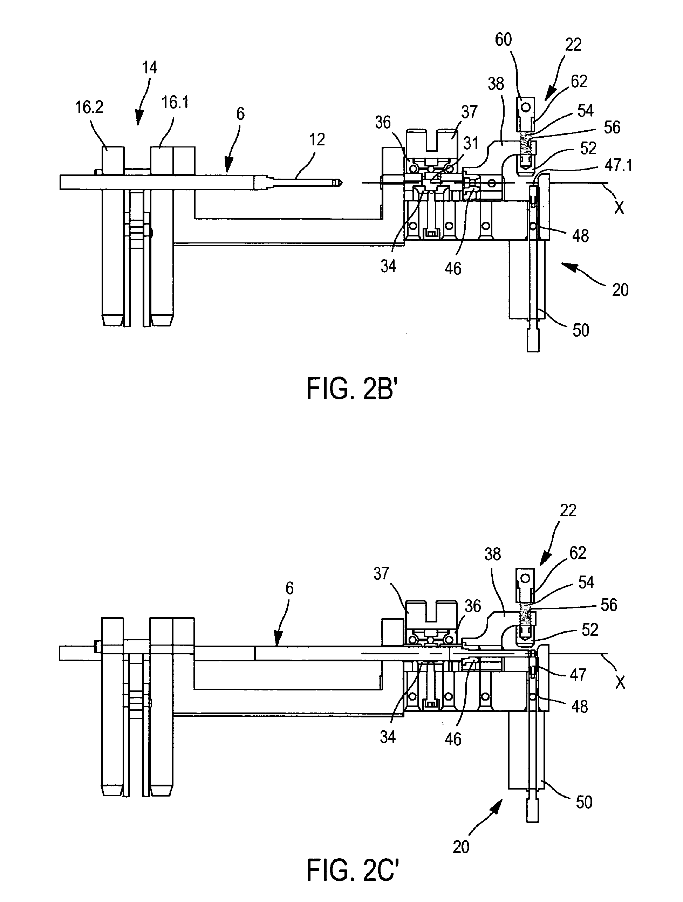

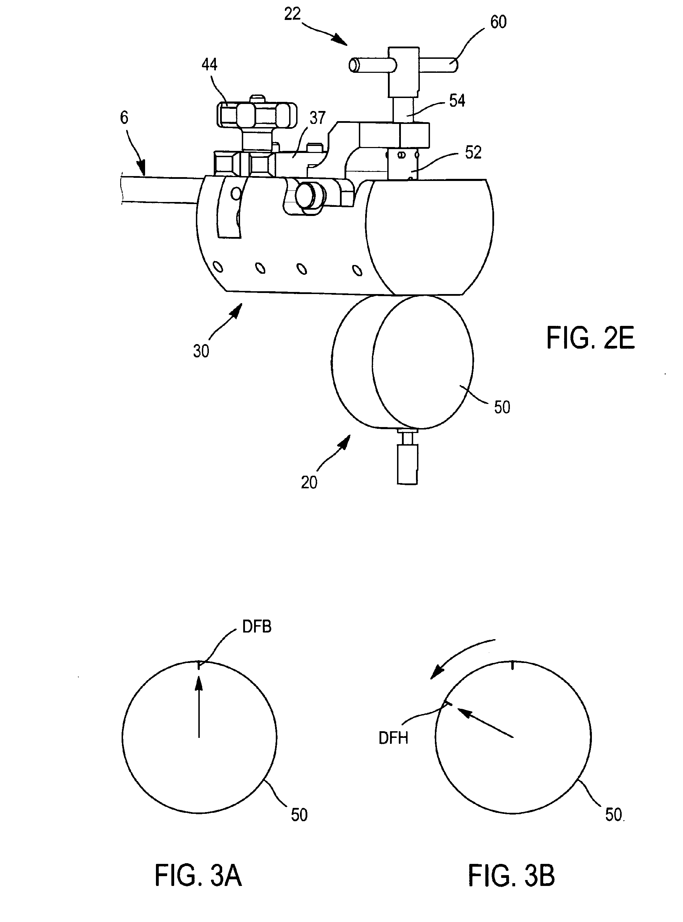

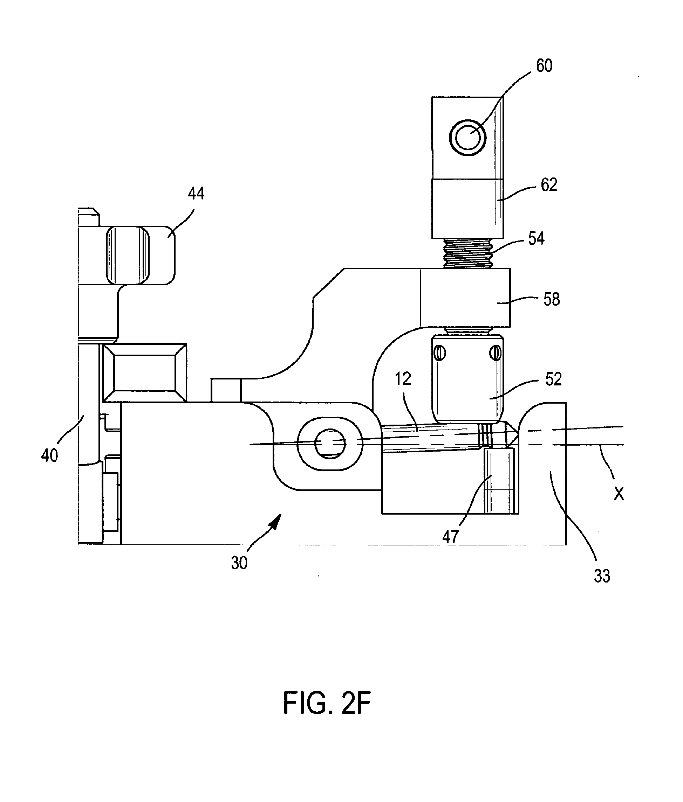

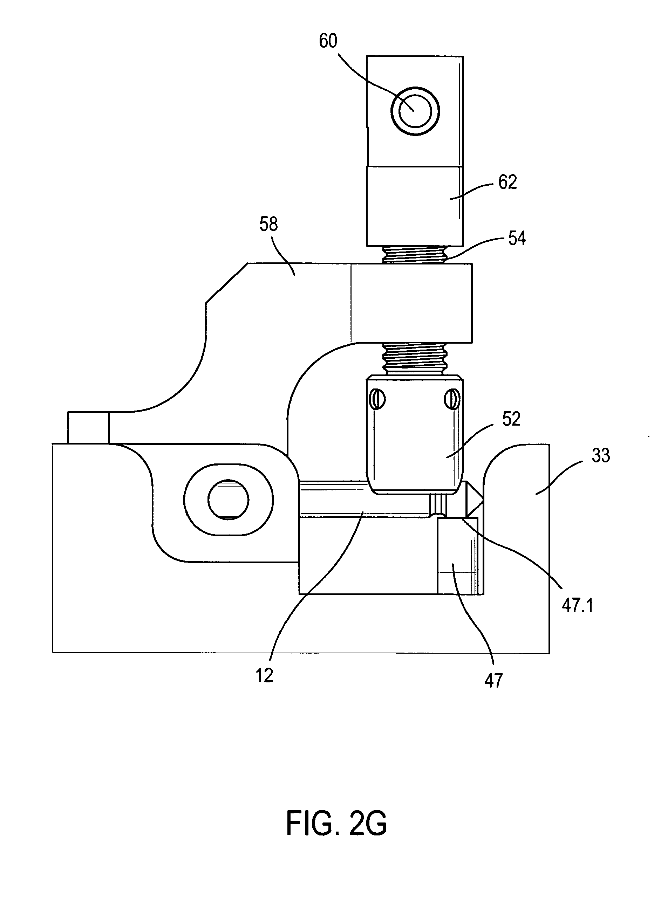

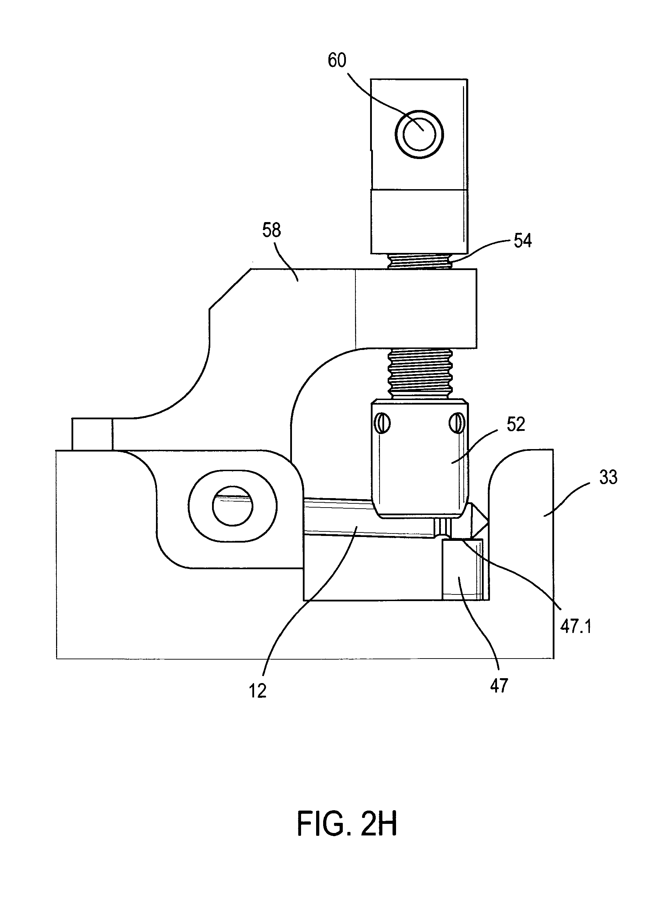

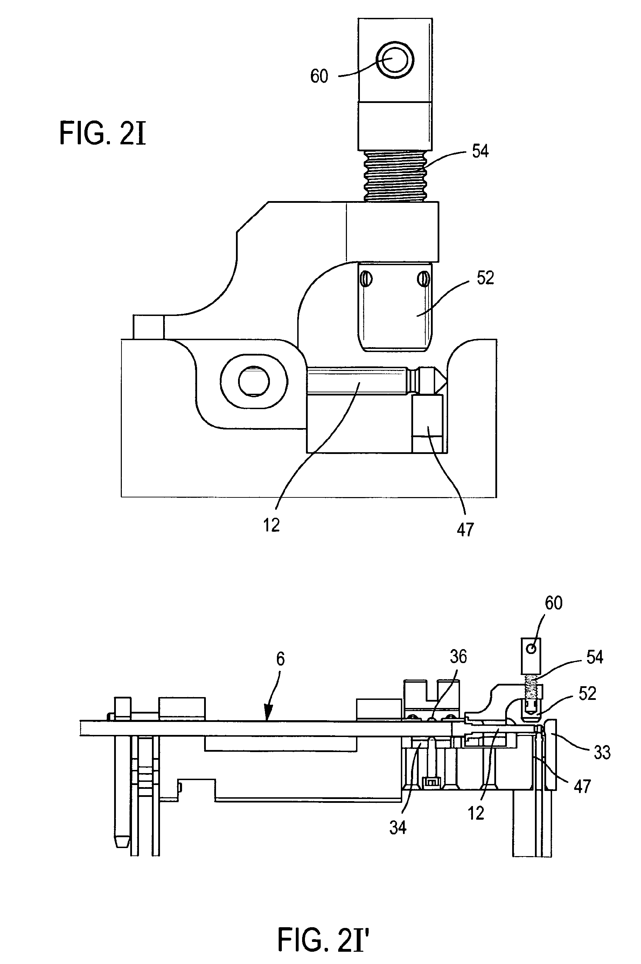

Le râtelier 4 comporte deux supports parallèles, à distance l'un de l'autre et supportant chacun une extrémité longitudinale d'un crayon. Chaque support comporte des encoches 10 formant des logements pour une extrémité longitudinale d'un crayon. Sur la figure 2, on peut voir le support 8.1 des extrémités de bouchon supérieur 6.1 des crayons 6.

Les crayons 6 sont reçus dans les encoches 10 suffisamment en amont du bouchon supérieur 12, de sorte que le bouchon et une partie de la gaine soient en porte-à-faux sur le support.

Le dispositif 2 comporte des moyens 14 pour positionner le dispositif sur le râtelier 4, plus particulièrement sur le support 8.1.

Dans l'exemple représenté, les moyens de positionnement 14 comportent deux pièces 16.1, 16.2 en forme de fer à cheval maintenues rigidement de manière parallèle par des tiges 18.

La largeur de l'entrefer des pièces 16.1, 16.2 est sensiblement égal au diamètre de la gaine d'un crayon pour permettre aux pièces 16.1, 16.2 de chevaucher un crayon.

De manière avantageuse, les fonds des entrefers ont un rayon de courbure sensiblement égal à celui de la gaine du crayon. La surface de contact entre les pièces 16.1 et 16.2 et le crayon est donc optimisée, réduisant les risques de déformation du crayon.

En outre, la distance séparant les deux pièces 16.1, 16.2 est sensiblement égale à l'épaisseur du support 8.1, ainsi on peut disposer les pièces de part et d'autre du support, et le dispositif est positionné de manière fixe par rapport au crayon du fait du faible jeu entre les faces du support et les faces des pièces.

Le dispositif comporte des moyens de mesure d'un défaut de parallélisme 20 et des moyens de correction 22 de ce défaut de parallélisme. Ces moyens 20, 22 sont disposés à une première extrémité longitudinale 24.1 d'un mât 26, qui est fixé par une deuxième extrémité longitudinale 24.2 aux moyens de positionnement 14.

Dans l'exemple représenté, le mât 26 est formé par deux poutres 26 parallèles reliées l'une à l'autre au niveau de leurs deuxièmes extrémités longitudinales du côté des moyens de positionnement 14, par une pièce en fer à cheval 28.

L'écartement des deux poutres 26 est identique à l'entrefer des pièces 16.1, 16.2. Lorsque le dispositif est en place, les poutres 26 s'étendent de part et d'autre du crayon.

Les moyens de mesure 20 et de correction 22 sont disposés sur une plateforme 30, sur laquelle sont également prévus des moyens de maintien 32 d'un crayon. Les moyens de maintien 32 sont disposés entre les moyens de positionnement 14 et les moyens de mesure et de correction.

Un emplacement longitudinal 31 d'axe X du crayon (cf. figure 2E) est délimité entre les poutres, et dans la plateforme 30 entre les moyens de maintien 32 et un fond 33 formant butée, les moyens de mesure 20 et de correction 22 bordant cet emplacement 31.

Nous allons maintenant décrire en détail les moyens de maintien 32.

Les moyens de maintien 32 sont destinés à enserrer suffisamment le crayon pour servir de référence à la mesure, tout en permettant la rotation du crayon autour de son axe.

Les moyens de maintien comportent une mâchoire inférieure 34 en forme de V destinée à supporter le crayon, et une mâchoire supérieure 36 également en forme de V destinée à venir par-dessus le crayon pour éviter son déplacement dans un plan orthogonal à l'axe du crayon.

La mâchoire inférieure 34 forme la référence pour la mesure.

De manière avantageuse, les mâchoires 34, 36 sont réalisées en un matériau permettant le glissement du crayon, ce qui permet de ne pas gêner la rotation. Elles sont réalisées, par exemple en ertalyte®.

Dans l'exemple représenté, la mâchoire supérieure 36 est montée sur une platine 37, elle-même montée articulée sur la plateforme 30 autour d'un axe parallèle à l'axe du crayon, ce qui permet d'ouvrir les moyens de maintien et de faciliter la mise en place du crayon. Il est également prévu un système 38 pour verrouiller la mâchoire supérieure 36 en position de maintien du crayon, i.e. en regard de la mâchoire inférieure 34. Le système de verrouillage 38 comporte une tige 40 montée sur la plateforme 30, articulée en rotation sur celle-ci autour d'un axe parallèle à l'axe X, du côte opposé à celui de l'axe d'articulation de la mâchoire supérieure 36.

La tige 40 comporte une extrémité 40.1 filetée sur laquelle est vissé un bouton 44. La platine 37 de la mâchoire supérieure 36 comporte une encoche 45 du côté opposé à son axe d'articulation destinée à recevoir la tige filetée 40, le bouton 44 étant disposé à l'extérieur de sorte à exercer un effort de serrage sur la platine pour verrouiller la mâchoire supérieure 36 en regard de la mâchoire inférieure 34, dans la position représentée sur la figure 2C.

Tout autre système pour permettre l'écartement et le rapprochement des mâchoires inférieure 34 et supérieure 36 peut être prévu. Par exemple, on peut prévoir de monter la mâchoire supérieure 36 sur deux tiges filetées, la mâchoire supérieure 36 se déplaçant parallèlement à la mâchoire inférieure 34. Le verrouillage est alors provoqué au moyen de deux écrous.

La plateforme comporte en aval des moyens de maintien, une bague 46 destinée à reprendre l'ensemble de l'effort de déformation nécessaire à la correction.

Les moyens de mesure d'un défaut de parallélisme 20 sont disposés à l'extrémité libre de la plateforme 30 de sorte à être situés en dessous du crayon, comme on peut le voir sur la figure 2A.

Dans l'exemple représenté et comme on peut le voir sur les figures 2B' et 2C', les moyens de mesure 20 sont du type à poussée mécanique, formés par un palpeur 47 apte à coulisser dans un alésage 48 pratiqué dans la plateforme 30. Dans l'exemple représenté, l'alésage 48 est vertical. Le palpeur 47 est destiné à venir en contact par son extrémité libre 47.1 avec l'extrémité bouchon supérieur. Le palpeur 47 est relié à un mouvement mécanique, pour convertir le déplacement longitudinal du palpeur 47 en une valeur de défaut de parallélisme.

Cette valeur est ensuite affichée sur un cadran 50 pour être visible de l'opérateur. Dans l'exemple représenté, il s'agit d'un cadran à aiguille.

Le mouvement mécanique est composé d'engrenages, de biellettes et de secteurs dentés pour permettre cette conversion.

On peut prévoir d'utiliser des moyens électroniques pour convertir ce déplacement, par exemple à l'aide des moyens optiques, de membrane piézoélectrique, et d'avoir un affichage digital.

Des capteurs capacitifs peuvent également être utilisés au lieu d'un capteur mécanique.

Les moyens de mesure forment un comparateur destiné à comparer la forme de l'extrémité bouchon supérieur du crayon par rapport à une référence qui est donnée par la mâchoire inférieure 34, et à afficher la différence par rapport à cette référence.

Le palpeur 47 est rappelé vers le haut par un moyen élastique assurant un contact continu du palpeur sur le crayon et permettant une mesure continue.

Les moyens de correction 22 sont destinés à appliquer un effort sur l'extrémité bouchon supérieur de sorte à supprimer le défaut, ou pour le moins le réduire de sorte qu'il soit dans des tolérances acceptables.

Les moyens de correction 22 sont disposés de manière diamétralement opposée au palpeur par rapport au crayon de sorte que, simultanément à la correction du défaut de parallélisme, le palpeur des moyens de mesure puisse permettre de connaître continuellement l'évolution du défaut.

Dans l'exemple représenté, l'axe de déplacement du poussoir 52 et celui du palpeur 47 ne sont pas dans le même plan orthogonal à l'axe du crayon. Mais il est bien entendu que cette configuration n'est en aucun cas limitative. La position du poussoir dépend de l'effort à transmettre au crayon. Par ailleurs, dans l'exemple représenté, il est disposé de sorte à ce qu'il n'y ait pas d'interaction avec la butée 33.

Les moyens de correction 22 comportent un poussoir 52 déplaçable verticalement, destiné à venir en contact avec l'extrémité bouchon supérieur pour appliquer sur celui-ci un effort de déformation.

Le poussoir 52 est monté par exemple à l'extrémité d'une tige 54 filetée montée dans un trou taraudé 56 réalisé à l'extrémité d'un bras 58. Le bras 58 est disposé de sorte que le palpeur 52 soit au droit de l'extrémité bouchon supérieur du crayon.

La tige 54 comporte une poignée 60 à son extrémité opposée à celle portant le poussoir 52, pour faciliter la mise en rotation de la tige filetée 54 et le déplacement vertical du poussoir 52. Ce système vis-écrou facilite le déplacement vertical du poussoir 52. Le poussoir 52 est monté libre en rotation sur la tige filetée 54.

Cette réalisation est particulièrement simple et robuste, en outre elle est légère et peu encombrante, ce qui rend le dispositif aisément portable.

Il est bien entendu que tout autre moyen pour déplacer le poussoir 52 entre dans le cadre de la présente invention, comme des moyens électriques, mécaniques, hydrauliques...

De manière avantageuse, le poussoir 52 comporte une gorge en V destinée à venir s'appliquer sur le crayon. L'effort est ainsi mieux réparti sur deux génratrices du crayon. En outre, la présence de cette gorge permet d'améliorer le maintien du crayon lors de l'application de l'effort de déformation, tout en évitant de déformer la surface du crayon.

Avantageusement, des moyens de butée 62 sont prévus pour éviter un déplacement vertical excessif du poussoir 52 en direction du palpeur, empêchant une déformation excessive de l'extrémité bouchon supérieur.

Ces moyens de butée verticaux 62 sont formés, dans l'exemple représenté, par une bague fixée sur la tige 54, du côté du bras 58 opposé au poussoir 52. La bague 62 est fixée à une position déterminée évitant une déformation excessive. La bague 62 vient en butée contre le bras 58 pour stopper le déplacement du poussoir 52 en direction du palpeur, et donc une déformation supplémentaire du crayon.

Le fond 33 de la plateforme 30 est en aval du palpeur 47 et est destiné à former une butée axiale pour le crayon. En fonctionnement, l'extrémité libre du crayon vient en appui contre cette butée 33.

A titre d'exemple, un dispositif selon la présente invention présente une longueur de 308 mm, une hauteur de 175 mm et une largeur de 71 mm, ce qui le rend facilement manipulable par un seul opérateur.

Nous allons maintenant décrire les différentes étapes de mesure et de correction d'un défaut de parallélisme d'un crayon de combustible nucléaire à l'aide d'un dispositif de mesure et de correction selon la présente invention.

Les crayons sont disposés sur le râtelier 4.

Le dispositif 2 est amené verticalement et est mis en place à cheval sur un crayon 6 et sur le support 8. Les pièces 16.1, 16.2 sont disposées de part et d'autre du support 8, et les poutres sont disposées de part et d'autre du crayon (figure 2A). Le dispositif 2 repose alors sur le crayon par le fond des entrefers des pièces 16.1, 16.2, comme on peut le voir sur la figure 2B. Dans cette position, l'extrémité bouchon supérieur se trouve entre les deux poutres (figures 2B et 2B').

Ensuite, le crayon est déplacé axialement afin de disposer l'extrémité bouchon supérieur sur le palpeur. Pour cela, le crayon coulisse sur la mâchoire inférieure 34, dans la bague 46, jusqu'à ce que son extrémité libre vienne en appui contre le fond 33. Lors de cette étape d'introduction, le palpeur 47 est maintenu dans une position basse pour éviter une interférence entre le crayon et le palpeur. Lorsque le crayon est en butée contre le fond 33, le palpeur est relâché et vient en appui contre l'extrémité bouchon supérieur (figures 2C et 2C').

La mâchoire supérieure 36 est ensuite rabattue sur le crayon, la tige est introduite dans l'encoche et le bouton est tourné pour verrouiller dans cette position relative les mâchoires inférieure 34 et supérieure 36. Sur la figure 2D, le crayon est verrouillé. Lors du verrouillage, on vérifie que le crayon et le palpeur sont effectivement en appui.

L'opérateur détermine tout d'abord le défaut. Pour cela, l'opérateur fait tourner le crayon autour de son axe, par exemple manuellement (figure 2E). Il fait tourner le crayon jusqu'à ce qu'il détecte un défaut de parallélisme. Il relève la valeur indiquée sur le comparateur (figure 3B) lorsque le défaut est orienté vers le haut DFH comme représenté sur la figure 2F, et la valeur indiquée sur le comparateur (figure 3A) lorsque le défaut est orienté vers le bas DFB.

L'opérateur calcule ensuite le battement B qui est égal à la différence entre DFH et DFB : B = DFH -DFB.

Il calcule ensuite le parallélisme P, égal à la moitié du battement : P = B/2 = (DFH-DFB)/2.

A partir de la valeur de P, l'opérateur peut déterminer quelle déformation il doit appliquer au crayon au moyen du poussoir pour corriger le défaut de parallélisme du crayon et le rendre acceptable.

La déformation est déterminée expérimentalement.

A titre d'exemple, si P ≤ 0,35 mm, la correction déterminée est 2,3 mm ; si P ≥ 0,35 mm, la correction déterminée est 2,4 mm.

Il faut par exemple appliquer un effort correspondant à l'effort nécessaire à appliquer sur une poutre cylindrique en Zircaloy de 5mm de diamètre et de 40mm de longueur, encastrée à une extrémité et libre de l'autre, pour déformer l'extrémité libre de 2.5mm.

L'opérateur calcule ensuite la correction à appliquer, i.e. la valeur à lire sur le comparateur lorsque le défaut est orienté vers le haut et qu'on applique un effort avec le poussoir.

Cette valeur DFH_{àatteindre} d est égale à la somme de la correction déterminée et du défaut DFH mesurée.

L'opérateur passe ensuite à l'étape de rectification du crayon.

L'opérateur positionne le crayon de sorte que le défaut soit orienté vers le haut.

Il met ensuite le poussoir 52 en appui sur le crayon, le crayon étant reçu dans la gorge en V, comme on peut le voir sur la figure 2G, aucun effort n'est encore appliqué sur l'extrémité bouchon supérieur.

On tourne la poignée pour que le poussoir applique un effort de déformation à l'extrémité bouchon supérieur en direction du palpeur pour modifier le défaut, comme cela est représenté sur la figure 2H, on peut voir que le palpeur 47 est enfoncé.

L'effort appliqué est tel qu'il provoque un déplacement de l'aiguille en sens inverse de la valeur DF du défaut, plus un déplacement supplémentaire de valeur donnée pour effectivement provoquer une déformation plastique du crayon. L'opérateur déplace le crayon jusqu'à lire sur le comparateur la valeur DFH_{àatteindre} déterminée ci-dessus.

Lors de la correction du défaut, l'opérateur visualise en permanence la déformation qu'il applique au crayon grâce au palpeur qui continue à mesurer la position de l'extrémité bouchon supérieur. Cette visualisation permet d'éviter d'appliquer un effort excessif au crayon. Le procédé de correction est donc plus rapide, puisqu'il est mieux maîtrisé.

Dans une étape ultérieure, l'opérateur relève le poussoir 52 (figure 2I et 2I') et vérifie le battement de l'extrémité bouchon supérieur.

Pour cela, le poussoir est remis en position haute. L'opérateur tourne à nouveau le crayon, et détermine le battement. Il mesure à nouveau le défaut lorsqu'il est orienté vers le haut et le défaut lorsqu'il est orienté vers le bas.

Il en déduit le battement B et le parallélisme P.

Si la valeur de cette différence est inférieure au seuil donné, le crayon a un parallélisme conforme.

Par exemple ce seuil peut être égal à 0,25, le battement ne doit pas, dans ce cas, dépasser 0,5.

Si, lors du contrôle le défaut de parallélisme est supérieur au seuil, l'opérateur recommence les étapes précédentes de correction de celui-ci par application d'un effort de déformation sur l'extrémité bouchon supérieur et de vérification du défaut de parallélisme.

Enfin, lorsque la valeur de parallélisme est conforme, on retire le crayon 6 en le faisant coulisser en éloignement du fond 33 et on retire le dispositif 2.

Il est bien entendu que l'on peut prévoir des moyens mécaniques pour mettre le crayon en rotation.

Ce dispositif présente l'avantage de permettre une correction du parallélisme de l'extrémité bouchon supérieur d'un crayon tout en permettant de quantifier continuellement la déformation effectuée, puisque les moyens de mesure 20 restent actifs lors de l'étape de correction.

Par ailleurs, ce dispositif est compact, facilement manipulable par un seul opérateur et combine la mesure du défaut et la correction de ce défaut. Il peut être mis en place sur chaque crayon avec une manipulation minimale des crayons, seul un déplacement longitudinal de quelques centimètres et des déplacements en rotation des crayons autour de leur axe sont requis.

En outre, ce dispositif utilise de manière avantageuse le râtelier comme support. Il ne requiert donc pas d'élément de support supplémentaire.

Dans la présente description, le palpeur et le poussoir ont des mouvements verticaux, mais il est bien entendu qu'un dispositif dont le palpeur et le poussoir ayant des déplacements selon des axes inclinés par rapport à la direction verticale ne sort pas du cadre de la présente invention ; dans ce cas on prévoira que le poussoir et le système de mesure soient en vis-à-vis.

## Revendications

1. Dispositif de mesure et de correction d'un défaut de parallélisme d'une extrémité bouchon supérieur d'un crayon (6) de combustible nucléaire entreposé sur un râtelier(4), ledit dispositif comportant :
- un emplacement (31) d'axe longitudinal (X) pour recevoir ledit crayon,
- des moyens de mesure (20) d'un défaut de parallélisme et des moyens de correction (22) dudit défaut, lesdits moyens de correction (22) étant disposés à l'opposé des moyens de mesure (20) par rapport à l'axe longitudinal de l'emplacement (31) du crayon (6), afin de permettre une mesure du défaut de parallélisme pendant la correction dudit défaut,
- des moyens de positionnement (14) dudit dispositif par rapport au crayon, lesdits moyens de positionnement (14) étant destinés à coopérer avec le crayon et le râtelier (4), le râtelier comportant deux supports parallèles, à distance l'un de l'autre et supportant chacun une extrémité longitudinale dudit crayon, lesdits moyens de positionnement (14) comportant deux pièces (16.1, 16.2) en forme de fer à cheval dont les fonds intérieurs sont destinés à reposer sur le crayon, les deux pièces (16.1, 16.2) étant écartées l'une de l'autre d'une distance donnée, de sorte à permettre le chevauchement du support du râtelier sur lequel repose l'extrémité bouchon supérieur du crayon lorsque le dispositif est mis en place, ledit support ayant une épaisseur sensiblement égale à la distance séparant les deux pièces (16.1, 16.2) en fer à cheval,
- un mât (26) muni d'une première extrémité sur laquelle sont disposés les moyens de mesure (20) et de correction (22) et une deuxième extrémité fixée aux moyens de positionnement (14),
- des moyens de maintien (32) du crayon tout en permettant de faire tourner ledit crayon autour de son axe longitudinal, lesdits moyens de maintien (32) étant disposés sur ledit mât entre les moyens de positionnement (14) et les moyens de mesure et de correction, lesdits moyens de maintien (32) comportant une mâchoire inférieure (34) et une mâchoire supérieure (36) destinées à enserrer le crayon, la mâchoire inférieure (34) formant une référence pour la mesure du défaut de parallélisme.

2. Dispositif de mesure et de correction d'un défaut de parallélisme selon la revendication 1, dans lequel les moyens de mesure (20) comportent un palpeur (47) destiné à venir en contact avec la périphérie de l'extrémité bouchon supérieur du crayon, ledit palpeur (47) étant mobile le long d'un axe transversal à l'axe de l'emplacement (31) du crayon.

3. Dispositif de mesure et de correction d'un défaut de parallélisme selon la revendication 1 ou 2, dans lequel les moyens de correction (22) comportent un poussoir (52) destiné à venir en contact avec la périphérie de l'extrémité bouchon supérieur du crayon, ledit poussoir (52) étant mobile le long d'un axe transversal à l'axe de l'emplacement du crayon, l'axe de déplacement du poussoir (52) et l'axe de déplacement du palpeur (47) étant contenu dans un plan contenant l'axe de déplacement du crayon.

4. Dispositif de mesure et de correction d'un défaut de parallélisme selon la revendication 1 à 3, dans lequel les mâchoires (34, 36) sont en matériau réduisant les frottements, par exemple en Ertalyte ®.

5. Dispositif de mesure et de correction d'un défaut de parallélisme selon l'une des revendications 1 à 4, dans lequel la mâchoire supérieure (36) est montée articulée autour d'un axe parallèle à l'axe de l'emplacement du crayon, et des moyens de verrouillage (38) en position de maintien des mâchoires inférieure (34) et supérieure (36) étant prévus.

6. Dispositif de mesure et de correction d'un défaut de parallélisme selon l'une des revendications 1 à 5 en combinaison avec la revendication 3, dans lequel le poussoir (52) est monté sur une extrémité d'une tige filetée (54) montée dans un trou taraudé (56) réalisé à l'extrémité d'un bras (58), ladite tige (54) comportant un poignée (60) à l'extrémité opposée à celle sur laquelle est fixé le poussoir (52), permettant de déplacer manuellement le poussoir (52).

7. Dispositif de mesure et de correction d'un défaut de parallélisme selon la revendication 6, dans lequel une butée (62) est fixée sur la tige à laquelle est fixé le poussoir (52) de sorte à limiter le déplacement du poussoir (52) en direction du palpeur (47).

8. Dispositif de mesure et de correction d'un défaut de parallélisme selon la revendication 1 à 7, comportant une bague (46) entre les moyens de maintien (32) et les moyens de correction (22), d'axe parallèle à l'axe de l'emplacement du crayon, ladite bague (46) étant destinée à être traversée par le crayon et destinée à reprendre les efforts de déformation appliqués au crayon.

9. Dispositif de mesure et de correction d'un défaut de parallélisme selon l'une des revendications 1 à 8, comportant une butée axiale (33) pour le crayon, cette butée (64) étant disposée transversalement par rapport à l'axe de l'emplacement du crayon, en aval des moyens de mesure (20) dans le sens d'insertion du crayon dans le dispositif.

10. Dispositif de mesure et de correction d'un défaut de parallélisme selon l'une des revendications 1 à 9, dans lequel les moyens de mesure (20) et les moyens de correction (22) sont portés par une plateforme (30) raccordée aux moyens de positionnement par deux poutres (26) parallèles destinées à longer le crayon.

11. Dispositif de mesure et de correction d'un défaut de parallélisme selon l'une des revendications 1 à 10 en combinaison avec la revendication 5, dans lequel les moyens de verrouillage comportent une tige filetée (40) montée articulée autour d'un axe parallèle à l'axe de l'emplacement du crayon, sur un côté opposé à celui sur lequel la mâchoire supérieure (36) est articulée, et un bouton (44) vissé sur la tige filetée (40), la mâchoire supérieure (36) comportant une encoche (45) pour recevoir la tige filetée (40), le bouton (44) étant disposé à l'opposé de la mâchoire inférieure (34) par rapport à la mâchoire supérieure (34) pour assurer le verrouillage des mâchoires inférieure (34) et supérieure (36), lorsque la tige (40) est dans l'encoche (45).

12. Procédé de mesure et de correction d'un défaut de parallélisme mettant en oeuvre le dispositif selon l'une des revendications précédentes, comportant les étapes :
a) mise en place du dispositif sur le crayon (6) au niveau de l'extrémité bouchon supérieur,
b) déplacement du crayon le long de son axe pour le positionner entre les moyens de mesure (20) et les moyens de correction (22),
c) verrouillage des moyens de maintien (32),
d) rotation du crayon (6) et détection du défaut de parallélisme,
e) détermination de la correction à effectuer,
f) orientation de ce défaut en direction des moyens de correction (22),
g) correction de ce défaut par application d'un effort de déformation appliqué par les moyens de correction (22), et contrôle simultané avec les informations fournies par les moyens de mesure (24),
h) vérification du défaut de parallélisme en contrôlant qu'il est inférieur à une valeur seuil donnée,
i) réitération des étapes d) à g) si la valeur du défaut de parallélisme est supérieure à la valeur seuil donnée.

## Claims

1. A device for measuring and correcting a parallelism error of the upper plug end of a nuclear fuel rod (6) placed on a rack (4), said device comprising:
- a location (31) with longitudinal axis (X) for receiving said fuel rod,
- means (20) for measuring a parallelism error and means (22) for correcting said error, said correcting means (22) being arranged opposite the measuring means (20) relative to the longitudinal axis of the location (31) of the fuel rod (6), in order to allow a measurement of the parallelism error during correction of said error,
- means (14) for positioning said device relative to the fuel rod, said positioning means (14) being intended to cooperate with the fuel rod and the rack (4), the rack comprising two parallel supports, spaced apart from each other and each supporting a longitudinal end of said fuel rod, said positioning means (14) comprising two horseshoe-shaped pieces (16.1, 16.2) whereof the inner ends are intended to rest on the fuel rod, the two pieces (16.1, 16.2) being spaced apart by a given distance, so as to allow the overlap of the support of the rack on which the upper plug end of the fuel rod rests when the device is put into place, said support having a thickness substantially equal to the distance separating the two horseshoe-shaped pieces (16.1, 16.2),
- a mast (26) having a first end on which the measurement (20) and correction (22) means are positioned and a second end which s attached to the positioning means (14),
- means (32) for holding the fuel rod while making it possible to rotate said fuel rod around its longitudinal axis, said holding means (32) being positioned on said mast between the positioning means (14) and the measurement and correction means, said holding means (32) comprising a lower claw (34) and an upper claw (36) intended to grip the fuel rod, the lower claw (34) forming a reference to measure the parallelism error.

2. The device for measuring and correcting a parallelism error according to claim 1, wherein the measuring means (20) comprise a probe (47) intended to come into contact with the periphery of the upper plug end of the fuel rod, said probe (47) being able to move along an axis transverse to the axis of the location (31) of the fuel rod.

3. The device for measuring and correcting a parallelism error according to claim 1 or 2, wherein the correcting means (22) comprise a push-piece (52) intended to come into contact with the periphery of the upper plug end of the fuel rod, said push-piece (52) being able to move along an axis transverse to the axis of the location of the fuel rod, the axis of movement of the push-piece (52) and the axis of movement of the probe (47) being contained in a plain containing the axis of movement of the fuel rod.

4. The device for measuring and correcting a parallelism error according to claim 1 to 3, wherein the claws (34, 36) are made from a friction-reducing material, for example Ertalyte®.

5. The device for measuring and correcting a parallelism error according to one of claims 1 to 4, wherein the upper claw (36) is mounted hinged around an axis parallel to the axis of the location of the fuel rod, and means (38) for locking the lower (34) and upper (36) jaws in the holding position being provided.

6. The device for measuring and correcting a parallelism error according to one of claims 1 to 5 in combination with claim 3, wherein the push-piece (52) is mounted on one end of a threaded rod (54) mounted in a tapped hole (56) made at the end of an arm (58), said rod (54) comprising a handle (60) at the end opposite that on which the push-piece (52) is fixed, making it possible to manually move the push-piece (52).

7. The device for measuring and correcting a parallelism error according to claim 6, wherein a stop (62) is fixed on the rod to which the push-piece (52) is fixed so as to limit the movement of the push-piece (52) towards the probe (47).

8. The device for measuring and correcting a parallelism error according to one of claims 1 to 7, comprising a ring (46) between the holding means (32) and the correcting means (22), with an axis parallel to the axis of the location of the fuel rod, said ring (46) being intended to be passed through by the fuel rod and intended to react the deformation stresses applied to the fuel rod.

9. The device for measuring and correcting a parallelism error according to one of claims 1 to 8, comprising an axial stop (33) for the fuel rod, said stop (64) being arranged transversely relative to the axis of the location of the fuel rod, downstream of the measuring means (20) in the direction of insertion of the fuel rod into the device.

10. The device for measuring and correcting a parallelism error according to one of claims 1 to 9, wherein the measuring means (20) and the correcting means (22) are supported by a platform (30) connected to the positioning means by two parallel beams (26) intended to border the fuel rod.

11. The device for measuring and correcting a parallelism error according to one of claims 1 to 10 in combination with claim 5, wherein the locking means comprises a threaded rod (40) hingedly mounted around an axis parallel to the axis of the location of the fuel rod, on a side opposite that on which the upper claw (36) is hinged, and a button (44) screwed on the threaded rod (40), the upper claw (36) comprising a notch (45) to receive the threaded rod (40), the button (44) being arranged opposite the lower claw (34) relative to the upper claw (34) to ensure locking of the lower (34) and upper (36) claws, when the rod (40) is in the notch (45).

12. A method for measuring and correcting a parallelism error using the device according to one of the preceding claims, comprising the following steps:
a) placing the device on the fuel rod (6) at the upper plug end,
b) moving the fuel rod along its axis to position it between the measuring means (20) and the correcting means (22),
c) locking the holding means (32),
d) rotating the fuel rod (6) and detecting the parallelism error,
e) determining the correction to be made,
f) orienting said error towards the correcting means (22),
g) correcting said error by applying a deformation stress applied by the correcting means (22), and simultaneous checking with the information provided by the measuring means (24),
h) verifying the parallelism error by checking that it is below a given threshold value,
i) repeating steps d) to g) if the value of the parallelism error is above the given threshold value.

## Patentansprüche

1. Vorrichtung zum Messen und zur Korrektur eines Parallelismus-Fehlers an einem Ende des oberen Verschlußstopfens eines auf einem Gestell abgelegten Kernbrennstoff-Stabs ( 6 ), die Vorrichtung umfassend:
-- eine Stelle ( 31 ) einer Längachse ( X ) zur Aufnahme des genannten Brennstoff-Stabs ;
-- Mittel ( 20 ) zum Messen eines Fehlers des Parallelismus bzw. der Parallelität sowie Mittel ( 22 ) zur Korrektur dieses Fehlers, wobei die Korrekturmittel ( 22 ) relativ bezüglich der Längachse der Lagerstelle ( 31 ) des Brennstoffstabs (6) den Meßmitteln ( 20 ) entgegengesetrzt gegenüberliegend angeordnet sind, um eine Messung des Parallelismusfehlers während der Korrektur dieses Fehlers zu gestatten,
-- Mittel ( 14 ) zur Positionierung der Vorrichtung relativ bezüglich dem Brennstoffstab, wobei diese Positionierungsmittel ( 14 ) bestimmungsgemäß mit dem Brennstoffstab und dem Gestell ( 4 ) zusammenwirken und das Gestell zwei parallele Träger in Abstand voneinander umfasst, die jeweils jeder ein Längsende des Brennstoffstabs abstützen, und wobei die genannten Positionierungsmittel ( 14 ) zwei hufeisenförmige Teile (16.1, 16.2 ) umfassen, die mit den Innenseiten ihrer Schenkelmulden bestimmungsgemäß auf dem Brennstoffstab aufruhen, und wobei die beiden hufeisenförmigen Teile einen vorgegebenen Abstand voneinander aufweisen, derart dass sie rittlings auf dem Träger des Gestells sitzen können, auf welchem das Ende des oberen Verschlußstopfens des Brennstoff-Stabs aufruht, wenn die Vorrichtung in Stellung gebracht wird, wobei der Träger des Gestells eine Dicke besitzt, die im Wesentlichen gleich dem Abstand zwischen den beiden hufeisenförmigen Teilen ( 16.1, 16.2 ) ist,
-- eine Tragschiene ( 26 ) mit einem ersten Ende, auf welchem die Meßmittel ( 20 ) und die Korrekturmittel ( 22 ) angeordnet sind, und mit einem zweiten Ende, an welchem die Positionierungsmittel ( 14 ) befestigt sind.
-- Halterungsmittel ( 32 ) für den Brennstoffstab, die gleichzeitig eine Rotation des Brennstoffstabs um seine Längachse gestatten, wobei diese Halterungsmittel ( 32 ) auf der Tragschiene zwischen den Positionierungsmitteln (14) und den Meß- und Korrekturmitteln angeordnet sind und eine untere Klemmbacke ( 34 ) und eine obere Klemmbacke ( 36 ) umfassen, welche einen Bezug bzw. eine Referenz für die Messung des Parallelismusfehlers bilden.

2. Vorrichtung zur Messung und zur Korrektur eines Parallelismusfehlers nach Anspruch 1, bei welcher die Meßmittel ( 20 ) einen Meß-bzw. Tastfühler ( 4 ) umfassen, der bestimmungsgemäß zur Berührung mit dem Umfang des Endes des oberen Verschlußstopfens des Brennstoffstabs gelangt und längs einer zur Lageachse ( 31 ) des Brennstoff-Stabs quer verlaufenden Achse verschieblich ist.

3. Vorrichtung zur Messung und zur Korrektur eines Parallelismusfehlers nach Anspruch 1 oder nach Anspruch 2, bei welcher die Korrekturmittel ( 22 ) einen Stößel bzw. Drücker ( 52 ) umfassen, der bestimmungsgemäß mit dem Umfang des Endes des Verschlußstopfens des Brennstoffstabs in Berührung gelangt, wobei der Stößel ( 52 ) längs einer zur Lagerungsachse des Brennstaoffstabs quer verlaufenden Achse verschieblich ist, und wobei die Achse der Verstellung des Stößels ( 52 ) und die Verschiebungsachse des Meßfühlers bzw. -Tasters ( 47 ) in einer die Verschiebungsachse des Brennstoffstabs enthaltenden Ebene liegt.

4. Vorrichtung zur Messung und zur Korrektur eines Parallelismusfehlers nach Anspruch 1 bis 3, bei welcher die Klemmbacken ( 34, 36 ) aus einem die Reibung verringerndem Material wie beispielsweise Ertalyte ® besteht.

5. Vorrichtung zur Messung und zur Korrektur eines Parallelismusfehlers nach einem der Ansprüche 1 bis 4, bei welcher die obere Klemmbacke ( 36 ) um eine zur Verschiebungsachse des Brennstoffstabs parallele Achse schwenkbar ist und bei welcher Mittel ( 34 ) zur Verriegelung der unteren und der oberen Klemmbacke in Halterungsstellung vorgesehen sind.

6. Vorrichtung zur Messung und zur Korrektur eines Parallelismusfehlers nach einem der Ansprüche 1 bis 5 in Verbindung mit dem Anspruch 3, bei welcher der Stößel ( 52 ) am einen Ende einer Gewindestange ( 54 ) angebracht ist, die in einer am Ende eines Hebelarms ( 58 ) befindlichen Gewindeöffnung ( 56 ) angeordnet ist, und bei welcher die genannte Gewindestange ( 54 ) an ihrem Ende entgegengesetzt zu dem Ende, an dem der Stößel befestigt ist, einen Handgriff ( 60 ) aufweist, welcher die manuelle Verstellung des Stößels ( 52 ) gestattet.

7. Vorrichtung zur Messung und zur Korrektur eines Parallelismusfehlers, nach Anspruch 6, bei welcher an der Stange, an welcher der Stößel ( 52 ) befestigt ist, ein Anschlag ( 62 ) angebracht ist, zur Begrenzung der Verstellung des Stößels ( 52 ) in Richtung zu dem Meßfühler bzw. -taster ( 47 ).

8. Vorrichtung zur Messung und zur Korrektur eines Parallelismusfehlers nach Anspruch 1 bis 7, welche einen Ring ( 46 ) zwischen den Halterungsmitteln ( 32 ) und den Korrekturmitteln ( 22 ) aufweist mit einer zu der Lagerungsachse des Brennstoffstabs parallelen Achse, wobei dieser Ring (36) bestimmungsgemäß von dem Brennstoffstab durchsetzt wird und bestimmungsgemäß die auf den Brennstoffstab ausgeübten Kräfte aufnehmen soll.

9. Vorrichtung zur Messung und zur Korrektur eines Parallelismusfehlers, nach einem der Ansprüche 1 bis 8, mit einem axialen Anschlag ( 33 ) für den Brennstoffstab, wobei dieser Anschlag ( 64 ) quer zur Lagerungsachse des Brennstoffstabs angeordnet ist, stromabwärts der Meßmittel ( 20 ) im Richtungssinn der Einführung des Brennstoffstabs in die Vorrichtung gesehen.

10. Vorrichtung zur Messung und zur Korrektur eines Parallelismusfehlers nach einem der Ansprüche 1 bis 9, bei welcher die Meßmittel ( 20 ) und die Korrekturmittel ( 22 ) von einer Plattform ( 30 ) getragen werden, die mit den Positionierungsmitteln über zwei parallele Träger bzw. Balken ( 26 ) zu beiden Seiten des Brennstoffstabs verbunden sind.

11. Vorrichtung zur Messung und zur Korrektur eines Parallelismusfehlers nach einem der Ansprüche 1 bis 10 in Kombination mit dem Anspruch 5, bei welcher die Verriegelungsmittel einen Gewindebolzen ( 40 ) umfassen, der um eine zur Lagerungsachse des Brennstoffstabs parallele Achse schwenkbar gelagert ist, auf der zur Anlenkungsstelle der oberen Klemmbacke ( 36 ) entgegengesetzen Seite, und bei welcher die Verriegelungsmittel des Weiteren einen mit dem Gewindebolzen verschraubten Knopf ( 44 ) umfassen, wobei die obere Klemmbacke ( 36 ) eine Schlitznut ( 45 ) zur Aufnahme des Gewindebolzens ( 40 ) aufweist, und wobei der Knopf ( 44 ) auf der der unteren Klemmbacke ( 34 ) entgegengesetzten Seite der oberen Klemmbacke ( 36 ) angeordnet ist, um die Verriegelung der unteren (34 ) und der oberen Klemmbacke ( 36 ) zu gewährleisten, wenn sich der Gewindebolzen ( 46 ) innerhalb der Schlitznut ( 45 ) befindet.

12. Verfahren zur Messung und zur Korrektur eines Parallelismusfehlers unter Verwendung der Vorrichtung nach einem der vorhergehenden Ansprüche, das Verfahren umfassend die folgenden Verfahrensstufen bzw. -schritte:
a) Anbringen der Vorrichtung auf dem Brennstoffstab im Beraich des Endes des oberen Verschlußstopfens,
b) Verschieben des Brennstoffstabs längs seiner Achse zu seiner Positionierung zwischen den Meßmitteln ( 20 ) und den Korrekturmitteln ( 22 ),
c) Verriegeln der Halterungsmittel ( 32 ),
d) Verdrehen des Brennstoffstabs ( 6 ) und Detektion des Parallelismusfehlers,
e) Bestimmen der auszuführenden Korrektur,
f) Orientierung bzw. Ausrichtung der Fehlerstelle in Richtung auf die Korrekturmittel ( 22 ),
g) Korrektur dieses Fehlers durch Ausüben einer mit Hilfe der Korrekturmittel ( 22 ) aufgebrachten Verformungskraft, und gleichzeitige Kontrolle mit den von den Meßmitteln ( 20 ) gelieferten Informationen,
h) Verifizieren des Parallelismusfehlers mittels Kontrolle, bis er kleiner als ein vorgegebener Schwellwert ist,
i) Wiederholen der Stufen bzw. Schritte d) bis g), wenn der Fehler größer als der vorgegebene Schwellwert ist.
